Europäisches Patentamt

European Patent Office

Office européen des brevets

(11) Publication number: **0 445 769 A2**

# EUROPEAN PATENT APPLICATION

(21) Application number: **91103403.1**

(22) Date of filing: **06.03.91**

(51) Int. Cl.5: **G06F 9/44**

(30) Priority: **08.03.90 JP 57712/90**

(43) Date of publication of application:
**11.09.91 Bulletin 91/37**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Aoe, Shigeru**
**5-3-11-702, Yashio**
**Shinagawa-ku, Tokyo, 140(JP)**
Inventor: **Kakehi, Gen**
**20-9-101, Edaminami 5-chome, Midori-ku**
**Yokohama-shi, Kanagawa, 227(JP)**
Inventor: **Ryu, Tadamitsu**
**1151-121-1-604, Kamigocho, Sakae-ku**
**Yokohama-shi, Kanagawa, 247(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Object-oriented program generation system.**

(57) Objects are capsuled in an object-oriented computer system by combining instance object sensors and method object sensors previously prepared and stored in a secondary memory (3). An element file (2) contains records including a record identifier and at least one of an attribute identifying at least one method and a command identifying an instance. Representations of the records in the element file (2) are displayed on a display screen (1) and a pair of records, one including a command and another including an attribute, are selected by a user to be combined into an object capsule. The object capsule is stored in an object file (6) for subsequent selection for execution. When an object capsule is selected for execution, the attribute and command stored therein are used to identify at least one method and an instance of data to be swapped into primary memory (8) from method and instance files (5, 4) in the secondary memory (3). A processor then executes the method to operate on the data which have been swapped into the primary memory (8) together.

*FIG. 1*

## BACKGROUND OF THE INVENTION

Field of the Invention

The present invention is directed to object-oriented program generation and, more particularly, to creating objects from previously stored instance and method object components using representations thereof on a display screen.

Description of the Related Art

Conventionally, creating software for a new system is a long, complex task requiring thousands of programmer-hours. Furthermore, to a great extent the software must be completed in stages. At a minimum substantially complete specification of lower level software is required to create or code higher levels of software. The difficulty in producing such software is compounded when the system includes distributed processing, multimedia data, sophisticated user interfaces, distributed relational databases, etc.

Attempts are currently being made to alleviate at least some of the difficulties referred to in the preceding paragraph by using object-oriented design of software. Instead of creating main programs with tightly linked subroutines, objects are created in which a method and data on which the method operates are associated and all communication between objects is performed using messages having a specified protocol. Object-oriented environments are only now becoming available after years of discussing the concepts involved. However, there has as yet been no determination of what is the best way of associating the methods and data.

## SUMMARY OF THE INVENTION

An object of the present invention is to simplify generation of programs for a computer system.

A further object of the present invention is to efficiently create objects in an object-oriented computer system.

Another object of the present invention is to create capsuled objects in an object-oriented computer system by selecting previously prepared objects for capsuling.

Yet another object of the present invention is to select object sensors for combination into a capsuled object using representations of the object sensors on a display screen.

The above objects are attained by providing a method of operating a computer system, comprising the steps of storing programs in a method file; storing data defining values and nature of instances in an instance file; storing, an element file, identifiers of instance object sensors, each corresponding to at least one item of data in the instance file, and method object sensors, each corresponding to a method defined by one of the programs in the method file; and forming objects for controlling the computer system by selecting at least one of the instance object sensors and at least one of the method object sensors for each object. Preferably, the objects are selected by a user generating a selection indication of representations of the records in the element file, which are displayed on a display screen. When an object is formed, an object capsule is preferably stored in an object file with the attribute and command of the selected records in the element file.

The objects are executed by first identifying an object to be executed, either from the display screen or via a message from a previously executing object. Next, the object capsule for the identified object is used to access the method file and instance file to obtain the data of the at least one instance and the at least one method, identified in the object capsule. Preferably, the object capsule refers to an attribute identifying the at least one method and a command identifying data in the instance file. Preferably, a realization table is provided for translating the command into an address in the instance file. The thus identified instance and method are swapped into a primary memory for execution by a processor.

These objects, together with other objects and advantages which will be subsequently apparent, reside in the details of construction and operation as more fully hereinafter described and claimed, reference being had to the accompanying drawings forming a part hereof, wherein reference numerals refer to like parts throughout.

## BRIEF DESCRIPTION OF THE DRAWINGS

Fig. 1 is a conceptual block diagram showing process flow in a computer system according to the present invention;

Fig. 2 is a more detailed block diagram of process flow in creating objects according to the present invention;

Figs. 3A and 3B are record formats of records in the element file and realization table, respectively;

Fig. 4 is a block diagram illustrating relationships between files in the present invention; and

Fig. 5 is an illustration of an example of a screen display generated using objects in a computer system according to the present invention.

## DESCRIPTION OF THE PREFERRED EMBODIMENTS

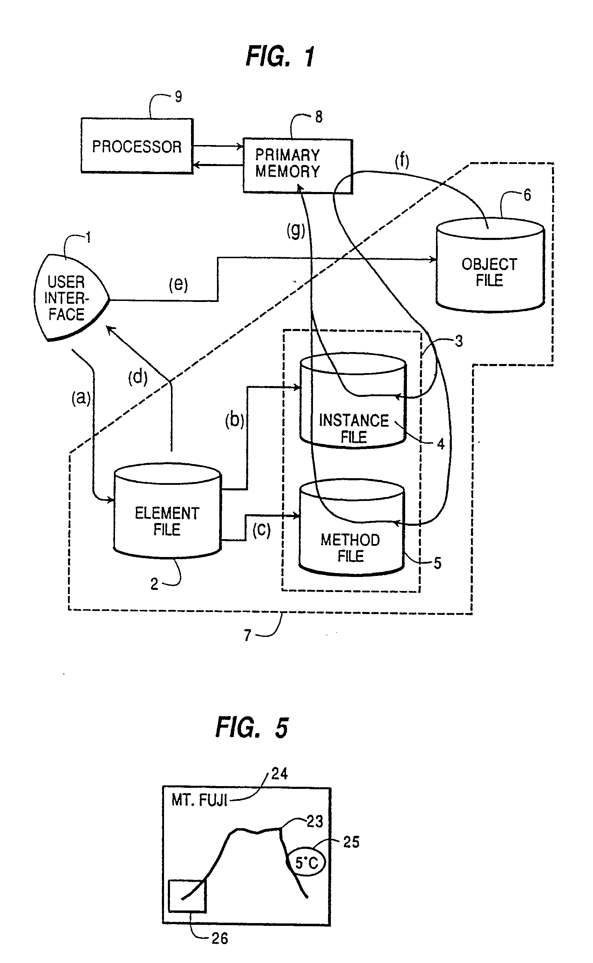

A block diagram of a computer system according to the present invention is illustrated in Fig. 1 with processing flow illustrated by lower case letters surrounded by parentheses. The user interface 1 includes a display screen and at least one input device, such as a keyboard, mouse, optical scanner or digitizer, etc. The user interface 1 is used to register (a) identifiers of object sensors in an element file 2. The object sensors include instance object sensors which include data and method object sensors which include a program. The data and programs themselves are stored in an entity file 3. The entity file includes an instance file 4 in which data is stored and a method file 5 in which programs are stored. The element file 2 contains records having pointers to the instance file 4 as indicated by (b) and the method file 5 as indicated by (c).

In a computer system according to the present invention, objects may include only a method, only data, or both. Thus, all of the records in the element file 2 point to objects. These objects can be distinguished from other objects in the computer system in that they are the basic building blocks which are used to form other objects used to operate the computer system. Therefore, they will be referred to as object sensors, even though they are themselves objects.

More complex objects are formed by the following process. First, records in the element file 2 are depicted (d) on the display screen in the user interface 1 to produce a table of contents of the element file 2. The table of contents may be a list of names of object sensors, graphical depictions of object sensors, or a combination of both.

A user provides a selection indication for one of the representations displayed on the display screen. The selection indication may be in the form of a signal from a screen pointing device, such as a mouse, track ball, light pen, touch sensitive screen, etc., or may be characters input from a keyboard. In either case, the selection indication identifies one of the records in the element file 2 that is to be included in an object capsule. Although it would be theoretically possible to capsule a single object sensor, ordinarily two or more object sensors are indicated as being selected. Identifiers for the selected object sensors are stored as an object capsule in an object file 6, together with a name for the object capsule.

Objects are used to control the operation of the computer system upon receiving an execution request for one of the objects represented by an object capsule stored in the object file 6. The request may be received directly from the user interface 1, or from another object having control of the computer system. The files 2-6 are preferably located in secondary storage 7. The object capsule of the requested object is transferred (f) from the object file 6 via primary memory 8 to access the object sensors stored in the entity file 3 corresponding to the identifiers in the object capsule. The data and program(s) referenced by identifiers in the requested object capsule are swapped into the primary memory 8. The program(s) can then be executed by a processor 9 to operate on the data which was swapped into the primary memory 8 together with the program(s).

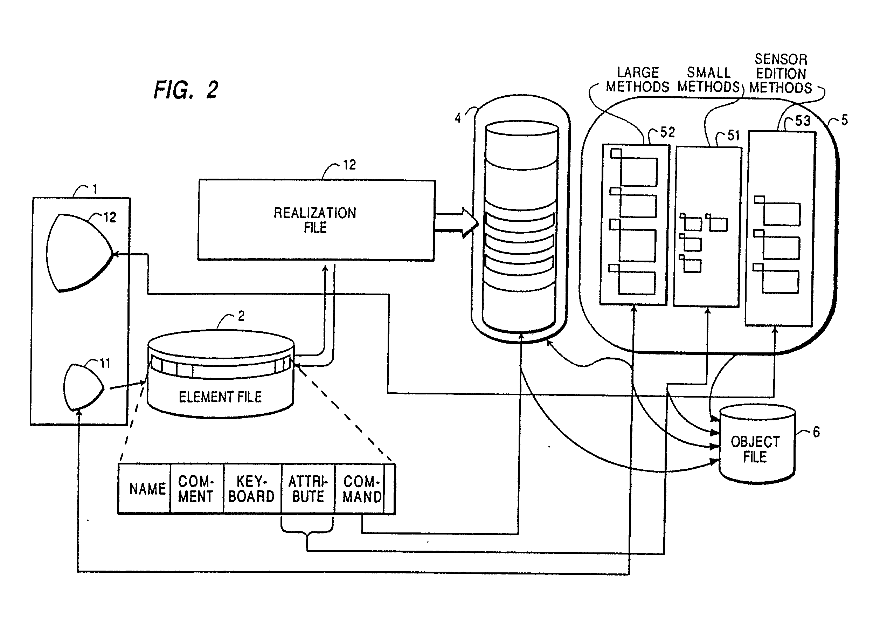

The process of forming the records in the element file 2 and object file 6 will be described in more detail with reference to Fig. 2. As described above, the user interface 1 performs several functions. It is used for creating the object sensors, the records in the element file 2 and the object capsules in object file 6, as indicated by input device 11, and for using the object capsules in object file 6 to control operation of the computer system, including generation of a display screen, as represented by device 12. In a physical embodiment of the present invention, the user interface 1 may use the same output device for all purposes and a variety of conventional input devices for any purpose.

For example, the object-oriented environment of the present invention may exist on a personal computer connected via a network to other personal computers. The network may also include a minicomputer or mainframe computer. The network may be a local area network (LAN), intelligent network (IN), integrated services digital network (ISDN), etc. The personal computer may include an INTEL 80386 or 80486 processor, one or more megabytes of RAM for primary memory and several tens or hundreds of megabytes of hard disk storage for secondary memory. Examples of input devices were given previously and output devices may include a CRT, printer, etc.

The computer system may operate under a conventional operating system, such as MS-DOS or UNIX, or a custom operating system designed specifically for an object-oriented environment. In either case, the object-oriented environment uses a kernel of e.g., 2000 C language instructions which define the operation of objects and the file architecture illustrated herein. This kernel can be provided by an ordinarily skilled systems programmer.

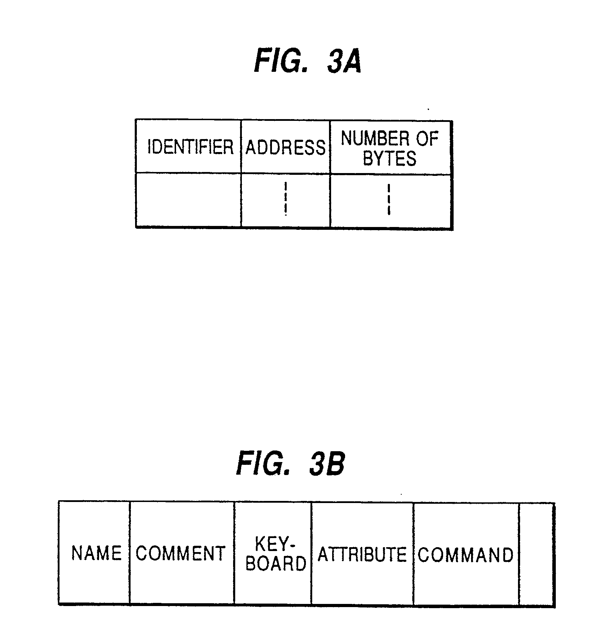

Data and programs are entered into the computer system by, e.g., input device 11, and stored in the instance file 4, and method file 5, respectively. In addition to direct input via the user interface 1, the data and programs may be received via the network from other computer systems operated by other users. In either case, identifiers of instance object sensors, each corresponding to at least one item of data in instance file 4 and method object sensors, each corresponding to at least one method defined by one of the programs in the method file 5, are stored in the element file 2. As illustrated in Fig. 3A, each record in the element file 2 includes a record identifier and may include an attribute or a command. The record for an instance object sensor has a command in the command field which points to an address in the instance file 4. A method object sensor includes an attribute, a portion of which points to one of the methods in the method file 5. As noted above, an object sensor may also point to both data and one or more methods.

The command and attribute, or portion thereof, may point directly to the instance file 4 and method file 5, respectively, as illustrated in Fig. 2, or these files may be addressed indirectly. In the preferred embodiment, the realization file 20 provides indirect addressing of the instance and method files. As illustrated in Fig. 3B, the realization file 20 may be as simple as a table of records, each having three fields: identifier, address and size (number of bytes). The identifier in the instance file portion of the realization table 20 corresponds to the command field of the element file record. In the method file portion of the realization table 20, the identifier is the attribute or portion thereof identifying the method to be used. The commands and addresses may be assigned automatically, based on the next available label or location. Attributes are preferably entered by users based on a predetermined coding scheme. For example, a portion of the attribute may indicate one of 16 colors to be used.

The other fields in an element file record are used for identifying the object sensors to the user. A name field may be displayed on the display screen in the user interface 1 and entered by the user on a keyboard to provide a selection indication of the corresponding object sensor. A comment field may be provided so that a brief description of the object sensor can be displayed, either upon request or in a table of contents screen with or without graphic images. A keyword field may be provided for one or more keywords to enable the records in the element file to be searched.

In one embodiment of the present invention, the attribute defines characteristics of graphical representations, such as color, shading, size, rotational orientation, etc. Each characteristic may be assigned a separate portion of the attribute field. For example, the code in the portion of the attribute field assigned to size identifies one or more methods used for clipping and scaling graphical data. In this embodiment, an element file record may be formed of a command identifying data defining a graphical representation for the display screen of the user interface 1 and an attribute defining the characteristics with which the graphical representation should be displayed. Object sensors corresponding to records in the element file 2 having both an attribute and a command, may be combined to form an object capsule which will define a more complex image to be displayed on the display screen 1. Furthermore, the object capsules themselves may be registered as object sensors so that increasingly complex images can be formed on the display screen.

For example, the simplest geometric forms, such as rectangle, triangle and circle may be stored as instances in the instance file 4. Programs for displaying these geometrical figures in various colors, shading, sizes and orientations may be stored in a small method portion 51 of the method file 5. Records may be stored in the element file 2 pointing to these data and programs. These object sensors may be capsuled to form more complex images, such as a house, tree, automobile, etc. If these object capsules are then registered in the element file 2, a new object may be formed by capsuling these more complex object sensors to form, e.g., a display of a house on a plot of land with trees and an automobile in a driveway.

Programs for associating an object with superclasses which include that object are stored in a large method portion 52 of the method file 5. These programs can be used to relate objects by gathering to form superclasses. In the example of an object sensor representing a house, the object sensor can be gathered together with other objects in the class "buildings". The class "buildings" can in turn be gathered with other classes, such as "bridges", "roads", etc., into the superclass "construction".

In the example given above, an object containing a graphical representation of a house may have a cryptic name, such as G52 and keywords such as "house, two dimensional". Different types of houses, one story, two story, bungalow, A-frame, etc., might be created all with the keyword house. Some objects depicting houses might be two-dimensional, e.g., front elevations, while others might provide perspective views. If all graphic objects have a name beginning with G and are sequentially numbered as they are created, the easiest way for a user to identify existing objects providing graphic representations of houses would be to search the keywords for "house". The searching may be performed by an object which displays a request for a keyword to the user and then searches through the keyword fields of the records in the element file to locate the requested keyword.

Such a search object may be invoked by pointing (using a mouse, touch screen, etc.) to a block labelled "SEARCH" displayed in a menu on the display screen. When the search object or any other object is requested, sensor edition methods 53 identify the selection indication and determine the corresponding object capsule in the object file 6. The object capsule points to the object sensors which were combined to form the object. The programs and data corresponding to the method and instance object sensors are then swapped into the primary memory 8 as described above.

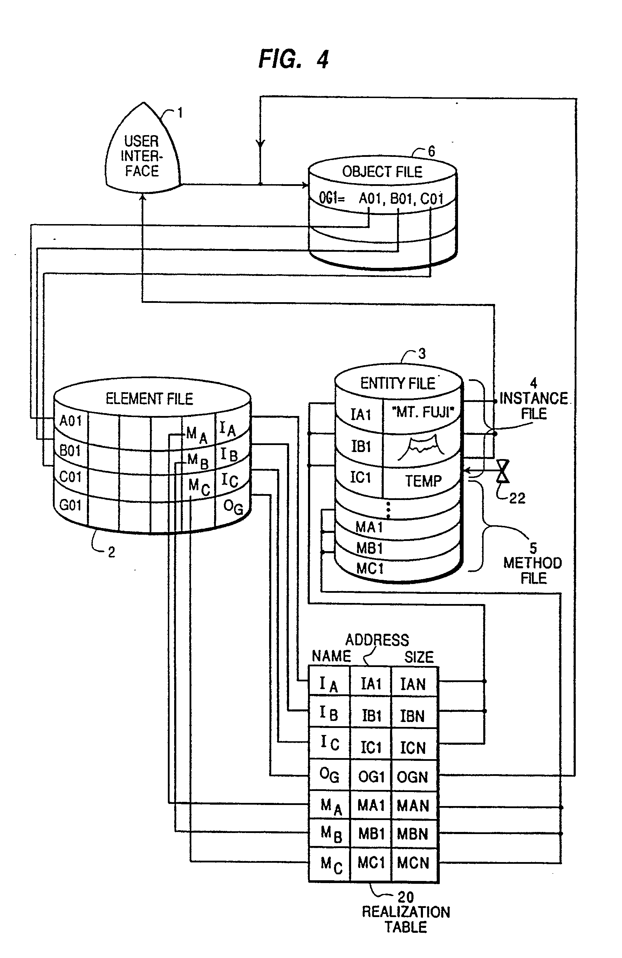

The relationship between the object, element and entity files and the realization table 20 will be described in more detail with reference to Fig. 4. As noted above, object capsules, like object sensors, are preferably registered in the element file 2 for use in building more complex objects. Unlike object sensors, however, capsuled objects may be swapped into the primary memory 8 to control execution of the computer system. Thus, the capsuled object G01 may be requested for execution from the user interface 1. In addition, the object G01 is included in the table of contents, since there is a record in the element file 2 which has a command that points to one of the entries in the realization table 20 which in turn points to the object capsule in the object file 6 for object G01. Thus, object G01 can be selected for combination with other capsuled objects and object sensors.

The object capsule G01 is formed of three object sensors A01, B01 and C01. In this example, all three object sensors include both a method and an instance. Object sensor A01 has an instance defined by textual data "MT. FUJI", as indicated in the entry of the instance file 4. Object sensor B01 is a graphical representation of the famous Japanese landmark. The methods $M_A$ and $M_B$ identified in the attribute field of the element file records define how the text and graphic are displayed on the display device.

The third object sensor C01 produces a display of temperature. A temperature sensor 22 provides temperature data, e.g., via the network, to a storage location in the instance file 4. The storage location is accessed as part of instance $I_C$ and displayed on the display screen by method $M_c$. Other portions of the attribute may define, for example, where the temperature is displayed. The methods are used to display the data in the instance file on the user interface as indicated. The processor which is used to display the data on the user interface 1 is not illustrated in Fig. 4. An example of the result is illustrated in Fig. 5 with the picture 23 and text 24 of Mt. Fuji, the temperature 25 and a hit area 26 which produces synthesized voice output describing the display.

The data in the instance file 4 may be of many different types. In addition to data which can be used to produce graphical representations on the display screen in the user interface 1, digitally encoded sounds, including music, pointers to or digitally encoded television pictures, facsimile encoded documents and many other types of data may be instances in a system according to the present invention. Furthermore, the graphical representations stored in the instance file 4 may be used not only after formation of object capsules, but also in the process of forming the object capsules. For example, as noted above, the table of contents may include or consist solely of graphical representations. These graphical representations may be stored separately, or may be based on the data stored in the instance file for graphical representations. The data in the instance file 4 may be displayed using some consistent method(s), or the data in the instance file may be further abstracted, so that a simplified image is displayed as part of the table of contents. For example, a detailed image of a house might be displayed in the table of contents as a simple silhouette of a house.

The many features and advantages of the present invention are apparent from the detailed specification, and thus it is intended by the appended claims to cover all such features and advantages of the system which fall within the true spirit and scope of the invention. Further, since numerous modifications and changes will readily occur to those skilled in the art from the disclosure of the invention, it is not desired to limit the invention to the exact construction and operation illustrated and described, accordingly, suitable modification and equivalents may be resorted to, as falling within the scope and spirit of the invention.

## Claims

1. A method of operating a computer system, comprising the steps of:
   (a) storing programs in a method file;
   (b) storing data defining values and nature of instances in an instance file;
   (c) storing, in an element file, identifiers of instance object sensors, each corresponding to at least one item of data in the instance file, and method object sensors, each corresponding to at least one method defined by one of the programs in the method file; and
   (d) capsuling objects for controlling the computer system by selecting at least one of the instance object sensors and at least one of the method object sensors for each object.

2. A method as recited in claim 1,
   further comprising the step of (e) displaying representations of the identifiers in the element file as a table of contents for the computer system, and
   wherein said capsuling in step (d) comprises the step of (d1) selecting the at least one of the instance object sensors and the at least one of the method object sensors in dependence upon the representations displayed in step (e).

3. A method as recited in claim 2,

wherein said capsuling in step (d) further comprises the step of (d2) storing object capsules, corresponding to the instance and method object sensors selected in step (d1), in an object file, each object capsule including identifiers of the at least one item of data and the at least one method corresponding to each of the at least one of the instance object sensors and method object sensors selected in step (d1); and

further comprising the step of (f) operating the computer system using the objects capsuled in step (d).

4. A method as recited in claim 3, wherein said operating in step (g) comprises the steps of:

(g1) receiving an execution request for one of the objects capsuled in step (d);

(g2) determining a corresponding object capsule for the one of the objects requested in step (g1);

(g3) swapping the at least one item of data and the at least one method identified in the corresponding object capsule, from the instance and method files, respectively, to a primary memory;

(g4) executing each program, defining each of the at least one method swapped into the primary memory in step (g3), in a processor; and

(g5) identifying any other object capsules to be swapped into the primary memory using messages generated by the program executed in step (g4).

5. A method as recited in claim 2,

further comprising the step of (f) inputting the programs stored in step (a) and the data stored in step (b) via at least one input device, and

wherein said storing in step (c) comprises storing records in the element file, each record including a record identifier providing identification of the record for users of the computer system and at least one of a command identifying the at least one instance object sensor and an attribute identifying the at least one method object sensor.

6. A method as recited in claim 5,

wherein said storing in step (c) comprises storing records having fields for a name, a comment and at least one keyword for searching, to provide the record identifier,

wherein said displaying in step (e) comprises displaying representations of the instance and method object sensors identified by the records in the element file, and

wherein said selecting in step (d1) comprises the steps of:

(d1A) receiving a selection indication from a user for one of the representations displayed in step (e); and

(d1B) selecting a corresponding object sensor corresponding to the one of the representations in dependence upon the selection indication.

7. A method as recited in claim 6,

wherein the representations displayed in step (e) include for each of the instance and method object sensors at least one of the name and a graphic representation thereof, and

wherein the selection indication received in step (d1A) may include a signal from a screen pointing device indicating selection of the one of the representations displayed at a corresponding position on the display screen.

8. A method as recited in claim 7, wherein the selection indication received in step (d1A) may include entry of the name as characters on a keyboard.

9. A method as recited in claim 5, wherein said inputting in step (f) comprises the steps of:

(f1) receiving the data defining one of the instance object sensors from the at least one input device;

(f2) receiving the record identifier from a user for the record corresponding to the data received in step (f1);

(f3) assigning the command to the data received in step (f1);

(f4) storing the record identifier and the command as one of the records in the element file;

(f5) storing the data in the instance file at an available location; and

(f6) storing, in a realization table, the command and information identifying the available location used in said storing in step (f5).

10. A method as recited in claim 9, wherein said inputting in step (f) further comprises the steps of:

(f7) receiving at least one of the programs defining one of the method object sensors, from the at least one input device;

(f8) receiving the record identifier from the user for the record corresponding to the at least one of the programs received in step (f7);

(f9) storing the record identifier and the attribute identifying the at least one of the programs received in step (f7) as one of the records in the element file;

(f10) storing each of the at least one of the programs in the method file at a corresponding location; and

(f11) storing, in the realization table, at least part of the attribute and information identifying the corresponding location used in said storing of each of the at least one of the programs in step (f10).

11. A method as recited in claim 9,

wherein said capsuling in step (d) further comprises the step of (d2) storing object capsules, corresponding to the instance and method object sensors selected in step (d1), in an object file, each object capsule including identifiers of the at least one object sensor and the at least one method object sensor selected in step (d1), and

further comprising the steps of:

(g) receiving an execution request for one of the objects capsuled in step (d);

(h) determining a corresponding object capsule for the one of the objects requested in step (g);

(i) accessing the realization table to locate the data and the at least one program identified in the corresponding object capsule;

(j) swapping the data and the at least one of the programs, identified in the corresponding object capsule, from the instance and method files, respectively, to a primary memory;

(k) executing the at least one program, swapped into the primary memory in step (j), in a processor, and

(l) identifying any other object capsules to control the computer system using messages generated by the program executed in step (k).

12. A computer system, comprising:

secondary storage for storing programs in a method file, data defining instances in an instance file and, in an element file, identifiers of instance object sensors, each corresponding to data in the instance file, and method object sensors, each corresponding to a method defined by one of the programs in the method file; and

a processor to capsule objects for controlling the computer system by selecting at least one of the instance object sensors and at least one of the method object sensors for each object.

13. A computer system as recited in claim 12, further comprising primary storage for programs and data being executed by said processor, the programs and data received by said primary storage from said secondary storage as objects previously capsuled by said processor.

14. A computer system as recited in claim 13,

wherein the element file contains records, each record including a record identifier, an attribute field for identifying at least one program in the method file and a command field for identifying corresponding data in the instance file,

wherein said secondary storage further includes a realization table having entries, each entry including one of an instance file address with a corresponding command and a method file address with a corresponding attribute portion, and

wherein said processor controls swapping of the programs and data into the primary memory by determining addresses of the data and the program using the realization table and the command and attribute fields in a selected record.

15. A computer system as recited in claim 14, further comprising an input device including a display screen for selecting the selected record and for selecting the one of the instance object sensors and the one of the method object sensors for each object capsuled by said processor in dependence upon representations thereof displayed on the display screen.

16. A record format for records defining capsuled objects in a computer system operating in an object-oriented environment, the record format of each record comprising:

a record identifier including at least one of a name of the record, a comment describing the record and a keyword for searching for the record;

an attribute identifying at least one method in a method file when the record is used to identify a method object sensor; and

a command identifying at least one instance in an instance file when the record is used to identify an instance object sensor, the method and instance object sensor being combinable into capsuled objects.

## FIG. 1

## FIG. 5

FIG. 2

## FIG. 3A

| IDENTIFIER | ADDRESS | NUMBER OF BYTES |
|---|---|---|
| | ¦ | ¦ |

## FIG. 3B

| NAME | COMMENT | KEY-BOARD | ATTRIBUTE | COMMAND | |
|---|---|---|---|---|---|
| | | | | | |

## FIG. 4